# EUROPÄISCHE PATENTSCHRIFT

(11) **EP 0 771 602 B1**
(45) Veröffentlichungstag und Bekanntmachung des Hinweises auf die Patenterteilung: **21.02.2001**
(21) Anmeldenummer: 96116972.9
(22) Anmeldetag: 23.10.1996
(51) Int. Cl.: B23B 29/02, B23B 29/034

(54) **Bohrstange**
Boring bar
Barre d'alésage

(30) Priorität: 30.10.1995 DE 19540374
(43) Veröffentlichungstag der Anmeldung: 07.05.1997
(73) Patentinhaber: MAPAL Fabrik für Präzisionswerkzeuge Dr. Kress KG, D-73431 Aalen (DE)
(72) Erfinder:
(74) Vertreter: Schrell, Andreas, Dr.

(56) Entgegenhaltungen:
- EP-A- 0 552 425
- US-A- 2 661 639
- US-A- 3 300 010
- US-A- 3 740 161
- US-A- 4 224 846

## Beschreibung

Die Erfindung betrifft eine Bohrstange zum Bearbeiten von in axialer Richtung in einem Abstand zueinander angeordneten Bohrungsoberflächen gemäß Oberbegriff des Anspruchs 1.

Bei der Bearbeitung von Bohrungen der obengenannten Art, insbesondere von Kurbel- und Nockenwellen-Lagerbohrungen werden Werkzeuge eingesetzt, die eine Schneide aufweisen. Das Werkzeug wird zunächst in die erste Lagerbohrung eingeführt, um die zugehörige Oberfläche zu bearbeiten. Dabei ist der Vorschub entsprechend langsam. Nach Fertigstellung dieser Lagerbohrung wird das Werkzeug beschleunigt vorgefahren, um die nächste Lagerbohrung zu bearbeiten. Es zeigt sich, daß die Bearbeitungszeit durch die sukzessive Bearbeitung der in Reihe angeordneten Lagerbohrungen relativ groß ist.

Es werden daher auch Bohrstangen eingesetzt, die mehrere in Längsrichtung der Bohrstange verteilte Schneiden aufweisen. Die Schneiden sind dabei in einer gedachten Linie angeordnet, die parallel zur Mittelachse der Bohrstange verläuft. Um die Bohrstange in das zu bearbeitende Werkstück, beispielsweise einen Motorblock einzuführen, wird dieser angehoben, so daß die Bohrstange eingebracht werden kann. Wenn alle Schneiden unmittelbar vor der zu bearbeitenden Lagerbohrungsoberfläche angeordnet sind, wird der Motorblock wieder abgesenkt. Nach Bearbeitung der Bohrungsoberflächen muß der Motorblock wieder angehoben werden, damit die Bohrstange ohne Beeinträchtigung der Bohrungsoberflächen aus dem Werkstück ausgefahren werden kann. Diese Bearbeitungsweise ist relativ aufwendig. Außerdem ergeben sich durch die Verlagerung des Motorblockes Ungenauigkeiten bei der Bearbeitung der Bohrungsoberflächen.

Aus der US-A 2,661,639 ist eine Bohrstange bekannt, die eine nach außen verlagerbare Schneideinrichtung aufweist, die in einem Gehäuseteil geführt ist. Das Gehäuseteil ist von einer konischen Bohrung durchsetzt, in die ein konischer Bolzen eingreift. Der Bolzen ist federbelastet und drückt mit seiner konischen Außenfläche die Schneideinrichtung nach außen gegen die zu bearbeitende Wand des Werkstücks. Die Ausfahrbewegung beziehungsweise Ausfahrstellung der Schneideinrichtung stellt sich also durch die axiale Lage des konischen Bolzens und dem Abstand der Schneide der Schneideinrichtung zum Werkstück ein. Eine maßgenaue Bearbeitung des Werkstücks ist somit schwer möglich.

Es ist daher Aufgabe der Erfindung eine Bohrstange zu schaffen, mit der Bohrungen der hier angesprochenen Art auf einfache Weise und genau bearbeitet werden können.

Zur Lösung dieser Aufgabe wird eine Bohrstange vorgeschlagen, die die in Anspruch 1 genannten Merkmale aufweist. Diese Bohrstange zeichnet sich erfindungsgemäß dadurch aus, daß die Betätigungseinrichtung eine nach außen gerichtete Stellbewegung der zumindest einen Schneideinrichtung gegen einen definierten jeweils der mindestens einen Schneideinrichtung zugeordneten Anschlag bewirkt. Dadurch, daß die Schneideinrichtung der Bohrstange mittels der Betätigungseinrichtung beweglich ist, kann die Bohrstange in einer zurückgezogenen Ruhestellung der Schneideinrichtung durch die zu bearbeitenden Bohrungen der Lager hindurchgeführt werden, auch wenn diese ein gewisses Aufmaß und damit einen kleineren Innendurchmesser als nach der Bearbeitung aufweisen. Die Schneideinrichtung kann also zurückbeziehungsweise eingefahren werden, um die Bohrstange in das Werkstück einfahren zu können. Zur Bearbeitung der Bohrungsoberfläche wird die Schneideinrichtung mit Hilfe der Betätigungseinrichtung in eine Arbeitsstellung ausgefahren. Damit die gewünschten Bohrungseigenschaften, also sowohl die Maße als auch die Oberflächengüte, eingehalten werden können, wird die zumindest eine Schneideinrichtung durch die Betätigungseinrichtung gegen den definierten Anschlag gefahren, aufgrund dessen sichergestellt ist, daß das gewünschte Bearbeitungsmaß eingehalten wird.

Besonders bevorzugt wird eine Ausführungsform der Bohrstange, bei der auch eine Führungsleiste mit Hilfe der Betätigungseinrichtung aus einer zurückgezogenen Ruhelage in eine ausgefahrene Arbeitsposition verlagert werden kann. Es ergibt sich dadurch ein kleinerer Außendurchmesser der Bohrstange und somit ein größerer Freiraum, so daß die Bohrstange leicht in das zu bearbeitende Werkstück eingeführt werden kann.

Besonders bevorzugt wird eine Ausführungsform der Bohrstange, bei der die Betätigungseinrichtung sowohl eine Schneide als auch eine zugehörige Führungsleiste gemeinsam verlagert. Die Bohrstange ist auf diese Weise einfach und kostengünstig realisierbar.

Bevorzugt wird außerdem eine Ausführungsform der Bohrstange, bei der die Betätigungseinrichtung hydraulisch ausgebildet ist und bei der als Arbeitsmedium Kühlmittel eingesetzt wird. In diesem Fall bedarf es also keiner zusätzlichen Mittel, um die Betätigungseinrichtung zu betätigen.

Weitere Vorteile und Ausgestaltungen ergeben sich aus den übrigen Unteransprüchen.

Die Erfindung wird im folgenden anhand der Zeichnungen näher erläutert. Es zeigen :
- Figur 1: eine schematische Seitenansicht des rückwärtigen Endes einer Bohrstange im Teilschnitt;
- Figur 2: eine schematische Seitenansicht des vorderen Endes einer Bohrstange im Teilschnitt;
- Figur 3: einen Querschnitt entlang der in Figur 2 dargestellten Linie III-III und
- Figur 4: einen Querschnitt durch eine weitere Ausführungsform einer Bohrstange.

Bohrstangen der hier angesprochenen Art sind allgemein zur Bearbeitung von in axialer Richtung in einem Abstand zueinander angeordneten Bohrungsoberflächen geeignet. Rein beispielhaft soll im folgenden davon ausgegangen werden, daß mit Hilfe der Bohrstange Lagerbohrungsoberflächen von Kurbel- und/oder Nockenwellen bearbeitet werden sollen.

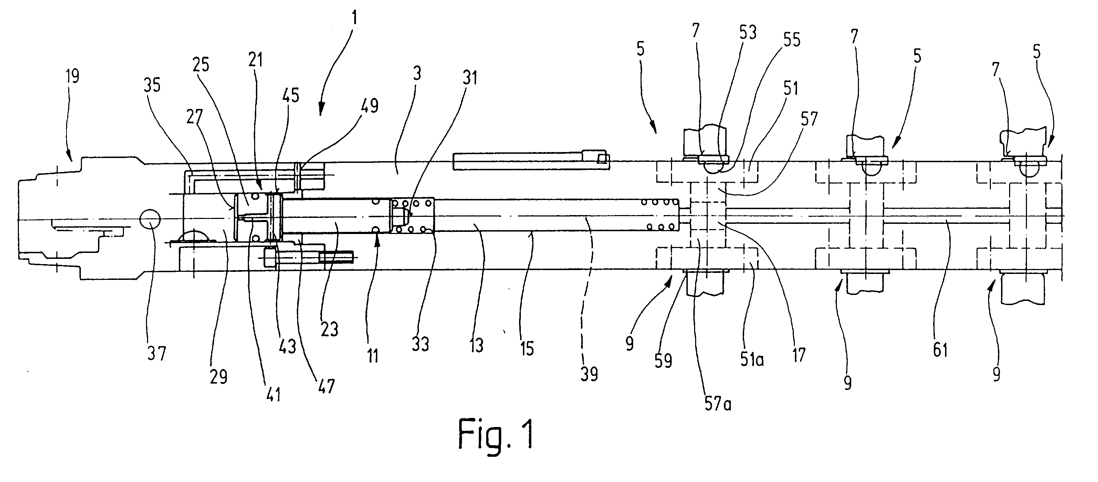

Die Darstellung in Figur 1 läßt erkennen, daß die Bohrstange 1 einen Grundkörper 3 aufweist, der im wesentlichen zylindrisch ausgebildet ist. Über die Länge des Grundkörpers 3 sind hier mehrere Schneideinrichtungen 5 verteilt. Es ist jedoch davon auszugehen, daß eine Bohrstange der hier angesprochenen Art auch nur eine einzige Schneideinrichtung aufweisen kann.

Die Schneideinrichtungen 5 weisen einen in axialer Richtung der Bohrstange 1 vorgegebenen Abstand auf, der dem Abstand entspricht, den die hier nur angedeuteten Lagerbohrungen 7 zueinander aufweisen. Den Schneideinrichtungen 5 sind Führungseinrichtungen 9 zugeordnet. Bei dem hier dargestellten Ausführungsbeispiel ist jeweils einer Schneideinrichtung 5 eine diametral gegenüberliegende Führungseinrichtung 9 zugeordnet.

Die Bohrstange 1 ist mit einer Betätigungseinrichtung 11 versehen, mit deren Hilfe die Schneideinrichtungen 5 und die Führungseinrichtungen 9 verlagerbar sind. Die Betätigungseinrichtung 11 weist einen abgeschlossenen Raum 13 auf, der im Inneren des Grundkörpers 3 angeordnet und mit einem flüssigen oder gasförmigen Medium gefüllt ist. Bevorzugt wird eine Betätigungseinrichtung 11, deren Raum 13 mit einem Hydrauliköl gefüllt ist. Der abgeschlossene Raum 13 wird durch eine den Grundkörper 3 durchdringende, in axialer Richtung verlaufende Bohrung 15 realisiert, die in Fluidverbindung mit Querbohrungen 17 steht, die im Bereich der Schneideinrichtungen 5 beziehungsweise Führungseinrichtungen 9 angeordnet sind.

Der abgeschlossene Raum 13 ist an seinem einem, hier der Antriebsseite 19 der Bohrstange 1 zugewandten Ende durch einen Kolben 21 verschlossen, der als Druckübersetzungseinrichtung wirkt. Der Kolben 21 weist einen ersten Abschnitt 23 auf, dessen Durchmesser an den Innendurchmesser des abgeschlossenen Raumes 13 angepaßt ist. Außerdem weist der Kolben 21 einen zweiten Abschnitt 25 auf, dessen Außendurchmesser größer ist als der des ersten Abschnitts 23 und dessen Stirnseite 27 als Abschluß eines Betätigungsraumes 29 dient. Die Querschnittsfläche der Stirnseite 27 ist bei dem hier dargestellten Ausführungsbeispiel etwa doppelt so groß wie die dem Raum 13 zugewandte Stirnfläche 31 des ersten Abschnitts 23.

Der Kolben 21 wird mit einer von einem Rückstellorgan 33 ausgehenden Rückstellkraft beaufschlagt. Das Rückstellorgan 33 kann beispielsweise als Schraubenfeder ausgebildet sein, die den Kolben 21 mit einer -in Figur 1 nach links wirkenden- Rückstellkraft beaufschlagt.

Der Betätigungsraum 29 wird hier mit Kühlmittel beaufschlagt, das über geeignete Kanäle 35 auch den Schneid- beziehungsweise Führungseinrichtungen 5, 9 zugeführt wird. Es ist hier ein Rückschlagventil 37 vorgesehen, das bei einem Werkzeugwechsel das Auslaufen des Kühlmittels aus dem Betätigungsraum 29 verhindert. Die bei einem Werkzeugwechsel in den Betätigungsraum 29 eingedrungene Luft kann über radiale Bohrungen, die in den Betätigungsraum 29 münden, entweichen. Die Kanäle 35 sind hier so geführt, daß über sie die Luft im Stillstand des Werkzeuges austreten kann.

Im Betrieb des Werkzeuges sammelt sich aufgrund der auf das Kühlmittel wirkenden Fliehkraft die in dem Betätigungsraum 29 eingedrungene Luft in der Nähe der Drehachse 39 der Bohrstange 1. Um diese aus dem Betätigungsraum 29 austreten zu lassen, ist der Kolben 21 im Bereich seines zweiten Abschnitts 25 mit einer zentrischen Bohrung 41 versehen, die über mindestens einen Querkanal 43 Luft austreten läßt.

Der Querkanal 43 mündet dazu in einer Ringnut 45, die in die Außenfläche des Kolbens 21 eingebracht ist und die in Fluidverbindung mit einem Raum 47 steht, aus dem die Luft entweichen kann.

In den Raum 47 mündet eine radial verlaufende Kontrollbohrung 49, in die ein hier nicht dargestellter Kontrollstift einführbar ist. Die Kontrollbohrung 49 ist so angeordnet, daß der Kontrollstift von dem Kolben 21 radial nach außen verdrängt wird, wenn der Kolben 21 gegen die Kraft des Rückstellorgans 33 über den normalen Betätigungsweg hinaus nach rechts verlagert wird. Wenn also aus dem abgeschlossenen Raum 13 Hydrauliköl austritt, kann der Kolben 21 der Betätigungseinrichtung 11 gegen die Kraft des Rückstellorgans 33 sehr weit nach rechts verschoben werden, so daß der Kontrollstift für eine Bedienungsperson sichtbar und somit ein Flüssigkeitsverlust erkennbar wird.

Die Schneideinrichtung 5 weist einen Tragkörper 51 auf, der in den Grundkörper 3 der Bohrstange 1 versenkt angeordnet ist und vorzugsweise eine rechtekkige Grundform aufweist, wobei sich die Längsachse des Tragkörpers 51 in Richtung der Drehachse 39 erstreckt. An dem Tragkörper 51 ist eine Schneidplatte 53 angebracht, wobei zur Verankerung eine übliche Spannpratze 55 verwendet wird. Bei längeren Schneidplatten können auch mehr als eine Spannpratze nebeneinander eingesetzt werden.

Von dem im wesentlichen rechteckigen Tragkörper 51 geht ein zylindrischer Ansatz 57 aus, der in der Querbohrung 17 geführt ist. Es können hier geeignete Dichtungsmittel, beispielsweise ein oder mehrere Runddichtringe eingesetzt werden, die den zylindrischen Ansatz 57 gegenüber der Querbohrung 17 so abdichten, daß aus dem abgeschlossenen Raum 13 keine Hydraulikflüssigkeit ausfließen kann.

Die Führungseinrichtung 9 ist entsprechend aufgebaut. Sie weist einen Tragkörper 51a auf, der ebenfalls eine rechteckige Grundform aufweisen kann, wobei seine Längsachse sich in Richtung der Drehachse 39 erstreckt. In die Außenfläche des Tragkörpers 51a ist hier eine Führungsleiste 59 eingesetzt. Denkbar ist es auch, mehr als eine Führungsleiste vorzusehen. Von dem Tragkörper 51a geht ein zylindrischer Ansatz 57a aus, der in der Querbohrung 17 angeordnet ist.

Die Querbohrung 17 steht, wie gesagt, in Fluidverbindung mit dem abgeschlossenen Raum 13, so daß sowohl die Schneideinrichtung 5 als auch die Führungseinrichtung 9 von der Betätigungseinrichtung 11 wie Schieber in radialer Richtung im Grundkörper 3 der Bohrstange 1 beweglich sind.

Die Schneideinrichtung 5 kann, ebenso wie die Führungseinrichtung 9 ein Rückführungselement aufweisen, das die Schneideinrichtung 5 beziehungsweise die Führungseinrichtung 9 mit einer radialen nach innen wirkenden Rückstellkraft beaufschlagt, so daß die beiden Schieber bei einer Druckentlastung im abgeschlossenen Raum 13 radial nach innen verlagert werden.

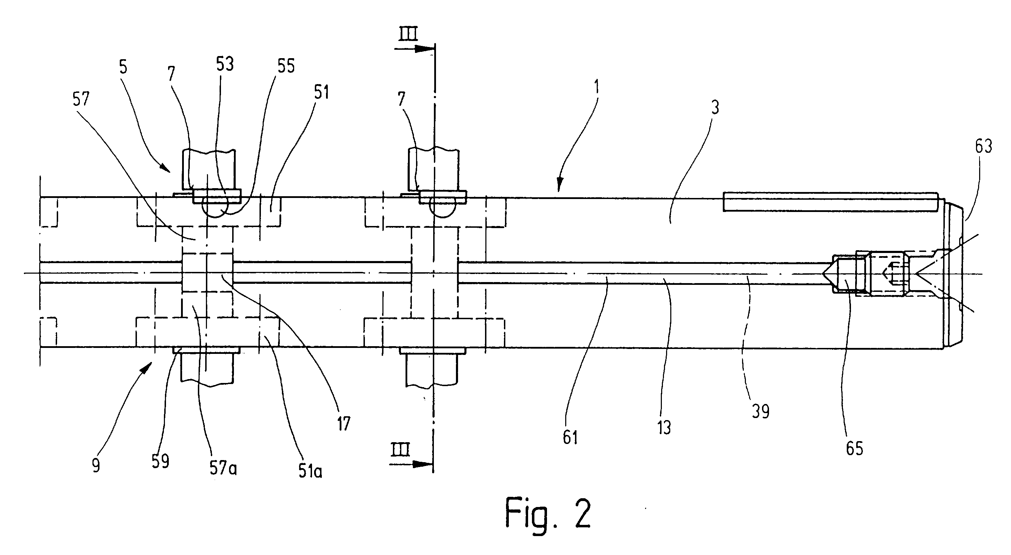

Figur 2 zeigt den vorderen Teil der in Figur 1 dargestellten Bohrstange 1. Gleiche Teile sind mit gleichen Bezugsziffern versehen, so daß auf deren ausführliche Beschreibung hier verzichtet werden kann. Aus der Darstellung ist ersichtlich, daß sich der abgeschlossene Raum 13, der eine den Grundkörper 3 der Bohrstange 1 durchdringende Längsbohrung 61 aufweist, bis zum Vorderende 63 der Bohrstange 1 erstreckt. Der vordere Mündungsbereich der Längsbohrung 61 ist durch ein geeignetes Verschließorgan 65, beispielsweise durch eine Schraube, verschlossen, die eine Befüllung des abgeschlossenen Raumes 13 mit Hydrauliköl ermöglicht. Die Schraube ist hier in etwa konzentrisch zur Drehachse 39 angeordnet. Denkbar ist es auch, daß der Raum 13 beziehungsweise die Längsbohrung 61 durch eine Querbohrung befüllt wird.

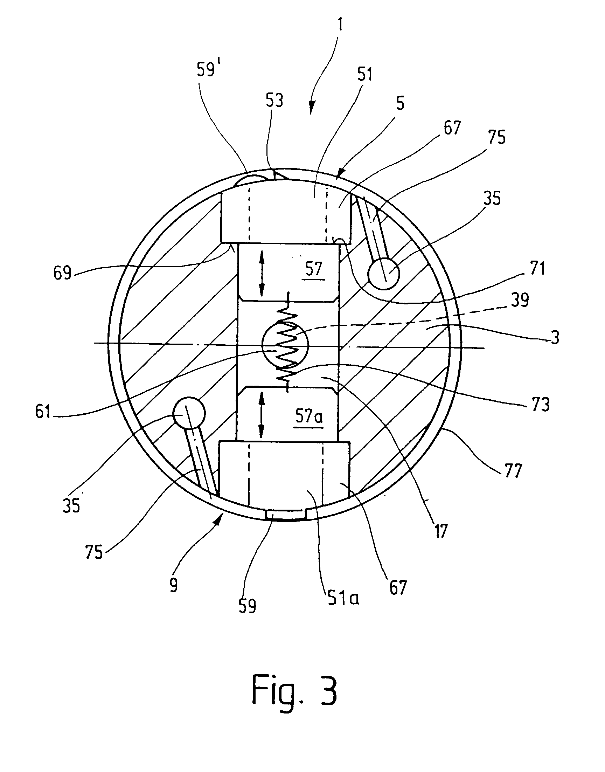

Figur 3 läßt die beiden Schieber der Schneideinrichtung 5 und der Führungseinrichtung 9 deutlich erkennen. Die Schnittdarstellung zeigt auch, daß im Bereich der Querbohrung 17 Führungselemente 67 vorgesehen sind, deren Querabmessung größer ist als der Durchmesser der Querbohrung 17. Durch eine gestrichelte Linie ist angedeutet, daß der Tragkörper 51 der Schneideinrichtung 5 und der Tragkörper 51a der Führungseinrichtung 9 schmaler sind als der zylindrische Ansatz 57 beziehungsweise 57a. Die Führungselemente 67 weisen Ausnehmungen auf, die an die äußere Form der Tragkörper 51, 51a angepaßt sind, so daß sich hier eine Führung für die Tragkörper ergibt und diese in ihrer Ausrichtung gehalten werden. Gleichzeitig dient die der Drehachse 39 zugewandte Unterseite 69 der Führungselemente 67 als Anschlag für die Oberseite 71 der zylindrischen Ansätze 57 und 57a.

Die axiale Bohrung 61 mündet, wie aus der Schnittdarstellung in Figur 3 ersichtlich, in der Querbohrung 17.

Die die Schieber in ihre radial innere Stellung zurückholenden Rückstellelemente 73 können als Schraubenfeder ausgebildet sein, die Zugkräfte auf die Schieber beziehungsweise auf die Schneideinrichtung 5 und Führungseinrichtung 9 ausüben. Die Rückstellelemente 73 sind so ausgelegt, daß die Schieber in ihre radial innere Stellung gezogen werden, wenn der Raum 13 drucklos ist. Bei der in Figur 3 gewählten Darstellung befinden sich die Schieber in ihrer äußersten Position an dem von der Unterseite 69 gebildeten Anschlag und damit also in ihrer Bearbeitungsposition. Figur 3 zeigt, daß die Kanäle 35 den Grundkörper 3 der Bohrstange 1 in Längsrichtung durchziehen und daß Zufuhrbohrungen 75 vorgesehen sind, die die Kanäle 35 schneiden und durch die das Kühl- und/oder Schmiermittel in den Arbeitsbereich der Schneidplatte 53 beziehungsweise der Führungsleiste 59 austreten kann.

Durch eine Linie 77 ist die zu bearbeitenden Oberfläche der Lagerbohrung angedeutet.

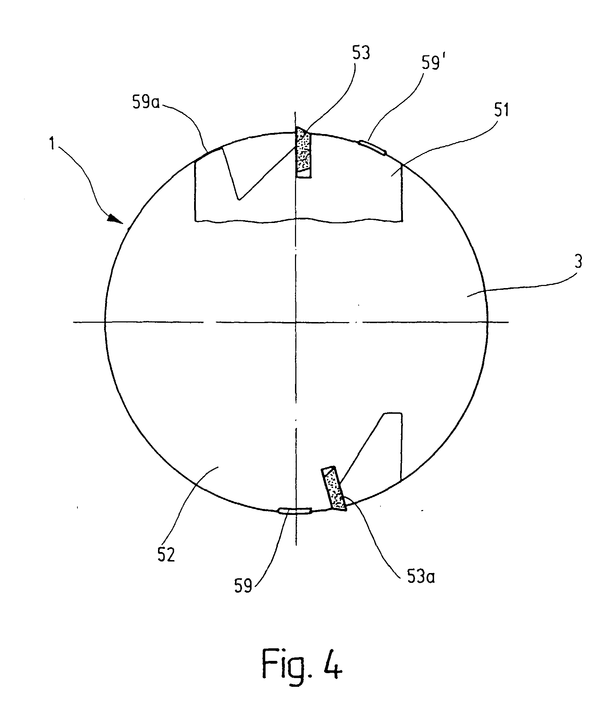

Aus der stark schematischen Ansicht in Figur 4, die eine Bohrstange im Querschnitt darstellt, ist ersichtlich, daß die Schieber so ausgebildet sein können, daß sie sowohl eine Schneidplatte als auch eine Führungsleiste aufweisen. Entsprechend der Darstellung in Figur 3 zeigt das Ausführungsbeispiel in Figur 4 im oberen Schieber S1 eine Schneidplatte 53, der im unteren Schieber S2 eine diametral gegenüberliegende Führungsleiste 59 zugeordnet ist. Der untere Schieber S2 weist außerdem eine Schneidplatte 53a auf, der -diametral gegenüberliegend- eine Führungsleiste 59a im oberen Schieber Sl zugeordnet ist.

Aus Figur 4 ist ersichtlich, daß an dem oberen Schieber S1 eine weitere Führungsleiste 59' vorgesehen sein kann, die zusätzlich zur Führungsleiste 59 der Schneidplatte 53 zugeordnet ist. Diese Führungsleiste 59' kann auch dann vorgesehen sein, wenn die Schneidplatte 53a und Führungsleiste 59a nicht vorhanden sind, das heißt also, sie kann auch bei einer Ausführungsform vorgesehen sein, wie sie in Figur 3 dargestellt ist.

Die Messerplatten und Führungsleisten sind auf bekannte Weise in den Schiebern beziehungsweise Führungseinrichtungen befestigt, so daß darauf hier nicht näher eingegangen werden soll.

Im folgenden soll auf die Funktion der Bohrstange 1 näher eingegangen werden:

Die Betätigungseinrichtung 11 wird bei der hier dargestellten Ausführungsform über das Kühlmittel gesteuert, das über das Rückschlagventil 37 in den Betätigungsraum 29 gelangen kann, von wo aus es über die Kanäle 35 zu den Schneidplatten 53 und Führungsleisten 59 gelangt. Steigt der Druck im Betätigungsraum 29, so wird der Kolben 21 gegen die Kraft des als Schraubenfeder ausgebildeten Rückstellorgans 33 gemäß Figur 1 nach rechts verlagert und führt dadurch zu einer Drucksteigerung im abgeschlossenen Raum 13. Da dieser in Hydraulikverbindung mit den Querbohrungen 17 steht, steigt auch dort der Druck an.

Bei einem bestimmten Druck werden die Schieber, das heißt die Schneideinrichtungen 5 und die Führungseinrichtungen 9 gegen die Kraft der Rückstellelemente 73 radial nach außen verlagert, bis sie an der als Anschlag dienenden Unterseite 69 der Führungselemente 67 anschlagen. Durch einen Druckaufbau im Raum 13 werden also sowohl die Schneideinrichtungen als auch die Führungseinrichtungen in eine definierte Arbeitslage verlagert, so daß eine maßgenaue Bearbeitung der Lagerbohrungsoberflächen möglich ist.

Soll die Bohrstange 1 in ein zu bearbeitendes Werkstück eingefahren werden, wird der Druck im Betätigungsraum 29 abgesenkt, so daß der Kolben 21 durch die Kraft des Rückstellorgans 33 nach links verlagert wird, so daß der Überdruck im Raum 13 abgebaut und gegebenenfalls auch ein Unterdruck erzeugt wird. Dadurch werden die Schieber beziehungsweise Schneid-/Führungseinrichtungen 5, 9 radial nach innen verlagert. Diese Einwärtsbewegung wird durch die Rückstellelemente 73 unterstützt. Es ist im übrigen denkbar, auf das Rückstellorgan 33 zu verzichten und durch die zwangsweise Rückführung der Schieber mit Hilfe des Rückstellelementes 73 einen Überdruck im Raum 13 auch dann aufrechtzuerhalten, wenn im Betätigungsraum 29 kein Kühlmittel-Druck vorherrscht. Durch den von den Rückstellelementen 73 aufgebauten Überdruck kann der Kolben 29 in seine Ausgangslage verlagert werden.

Bei dem hier dargestellten Ausführungsbeispiel sind die Führungseinrichtungen 9 den Schneideinrichtungen 5 gegenüberliegend angeordnet. Auf diese Weise werden die in die Schneidplatten 53 eingeleiteten Kräfte optimal abgefangen. Es ist denkbar, die Führungseinrichtungen 9 mit mehr als einer Führungsleiste 59 auszustatten. Es ist auch möglich, jedem der Schieber mehrere Schneiden und/oder Führungsleisten zuzuordnen.

Bei der Darstellung in Figur 1 liegen die Schneid- und Führungseinrichtungen 5 und 9 in einer gedachten Linie parallel zur Drehachse 39. Es ist jedoch auch möglich, benachbarte Schneideinrichtungen gegeneinander verdreht beziehungsweise versetzt anzuordnen, um die bei der Bearbeitung von Lagerbohrungen in das Werkzeug eingeleiteten Kräfte möglichst gleichmäßig zu verteilen.

Es ist schließlich auch möglich, Lagerbohrungen mit verschiedenen Durchmessern zu bearbeiten. Im rückgezogenen Zustand können die Schneid- und Führungseinrichtungen in die Bohrungen eingeführt werden. Bei Beaufschlagung des Raums 13 mit einem Überdruck werden die Schneideinrichtungen gemeinsam mit den Führungseinrichtungen gegen einen Anschlag bewegt, so daß sich eine definierte Arbeitslage ergibt. Durch die Wahl des Anschlags, aber auch durch eine entsprechende Einstellung der Schneidplatten 53 können verschiedene Bearbeitungsdurchmesser gewählt werden.

In diesem Zusammenhang sei noch hervorgehoben, daß die Bohrstange auch so ausgebildet sein kann, daß zusätzliche Führungsleisten vorgesehen sind, die beispielsweise einander gegenüberliegend angeordnet sind. Diese Führungsleisten können mit Hilfe der Betätigungseinrichtung ausgefahren werden, um eine optimale Abstützung der Schneiden zu gewährleisten. Das heißt also, die Bohrstange kann eine Schneide mit zugehöriger Führungsleiste und davon getrennt vorgesehene Führungsleisten aufweisen, die ebenfalls beweglich sind. Durch die zusätzlichen Führungsleisten kann eine verbesserte Abstützung der Bohrstange herbeigeführt werden. Bei einer derartigen Ausgestaltung der Bohrstange ist es auch möglich, Lagerbohrungen mit einem gegebenen Durchmesser zu bearbeiten und das Werkzeug dabei in einer anderen Bohrung mit größerem oder kleinerem Durchmesser mit Hilfe der zusätzlichen beweglichen Führungsleisten abzustützen. In allen Fällen führt die zusätzliche Abstützung des Werkzeugs dazu, daß die Maßhaltigkeit der bearbeiteten Bohrungsoberflächen und deren Güte besonders hoch sind.

Der Kolben 21 weist, wie oben angedeutet, zwei Abschnitte 23 und 25 auf, deren Außendurchmesser verschieden groß ist. Da der Außendurchmesser des zweiten Abschnittes 25 größer ist als der des ersten Abschnittes 23 wird der im Bearbeitungsraum 29 herrschende Druck im Verhältnis zu den Flächenverhältnissen der Abschnitte 23 und 25 so übersetzt, daß im Raum 13 ein höherer Druck herrscht als im Betätigungsraum 29. Bei dem hier dargestellten Ausführungsbeispiel können im Betätigungsraum 29 vorherrschende Druckwerte praktisch verdoppelt werden, so daß die Schieber mit hoher Kraft nach außen bewegt und in ihrer Arbeitsposition gehalten werden.

Bei dem anhand der Figuren erläuterten Ausführungsbeispiel sind alle Schieber beziehungsweise die den Schiebern zugeordneten Querbohrungen 17 über eine einzige Längsbohrung 61 verbunden. Es ist denkbar, verschiedene Längsbohrungen so zu führen, daß sie jeweils unterschiedlichen Querbohrungen 17 zugeordnet sind. Es ist damit möglich, die Schieber durch getrennte Kolben einzeln anzusteuern. In allen Fällen werden jedoch die Schneidplatten vorzugsweise gemeinsam mit den Führungsleisten bewegt, so daß sich jeweils definierte Arbeitsverhältnisse einstellen lassen.

Nach dem Obengesagten wir deutlich, daß die Führungselemente auch gegenüber den Schneidelementen versetzt angeordnet sein können. In diesem Fall ist es vorzuziehen, den Elementen jeweils separate Rückstellelemente zuzuordnen. Bei der anhand der Figuren 1 bis 3 dargestellten Anordnung können die Schneid- und Führungselemente mit einem gemeinsamen Rückstellelement 73 versehen sein, das gleichzeitig auf beide Schieber wirkt.

Grundsätzlich kann das Kühlmittel auch unmittelbar auf die Schieber wirken. Es müßte dann allerdings von dem Kühlmittel der für die Verlagerung der Schieber erforderliche Arbeitsdruck aufgebracht werden. Außerdem können Verunreinigungen, die sich im Kühlmittel fast nie vermeiden lassen, in den Bereich der zylindrischen Ansätze der Schieber gelangen und deren Beweglichkeit beeinträchtigen. Aus diesem Grund wird die hier dargestellte Ausführungsform bevorzugt, bei der den Schiebern beziehungsweise Schneid- und Führungseinrichtungen ein separates Hydrauliksystem zugeordnet ist, das über einen abgeschlossenen Raum 13 mit einem Hydraulikmedium beaufschlagt wird. Dieses Medium kommt mit dem Kühlmittel nicht in Kontakt, so daß also Verunreinigungen die Beweglichkeit der Schieber nicht beeinträchtigen können.

Durch das hier dargestellte Werkzeug können in axialer Richtung beabstandete Bohrungen optimal bearbeitet werden. Dadurch, daß den Schneidplatten zugeordnete Führungsleisten beweglich angeordnet sind, ergeben sich im Bearbeitungsbereich optimale Arbeitsbedingungen, das heißt, das Werkzeug wird so abgestützt, daß häufig auch auf Lagerstellen für die Bohrstange innerhalb des zu bearbeiteten Werkstückes verzichtet werden kann.

Da die Schneidplatten und Führungsleisten beim Einbringen der Bohrstange zurückverlagert werden können, bedarf es keiner Verlagerung des Werkstückes, um die Bohrstange in die Arbeitsposition zu bringen. Auch beim Ausfahren der Bohrstange kann das Werkstück in der Arbeitslage verbleiben, da die bearbeiteten Bohrungsoberflächen durch das Rückfahren der Schieber beziehungsweise der Schneid- und Führungseinrichtungen nicht mehr beschädigt werden können.

Für die hier beschriebene Bohrstange 1 ist wesentlich, daß die Betätigungseinrichtung 11 unmittelbar auf die Schneideinrichtungen 5 beziehungsweise Führungseinrichtungen 9 wirkt. Das heißt, es Bedarf nicht der Zwischenschaltung irgendwelcher mechanischer Stellglieder, um die Schieber von Schneidbeziehungsweise Führungseinrichtungen zu bewegen. Damit ist der Aufbau der Bohrstange sehr einfach und kompakt realisierbar. Überdies ist die Funktion sehr wenig störanfällig. Da die Schneideinrichtungen durch die Betätigungseinrichtung gegen einen Anschlag gefahren werden, ergeben sich auch ohne mechanische Stellmittel exakt definierbare Arbeitsbedingungen, so daß die bearbeiteten Bohrungsoberflächen sehr maßgenau sind und außerdem eine hervorragende Oberflächenqualität aufweisen.

## Patentansprüche

1. Bohrstange zum Bearbeiten von in axialer Richtung in einem Abstand zueinander angeordneten Bohrungsoberflächen, insbesondere von Kurbel- und/oder Nockenwellen-Lagerbohrungen, mit mindestens einer Schneideinrichtung und wenigstens einer der Schneideinrichtung zugeordneten Führungseinrichtung und mit einer auf die Schneideinrichtung wirkenden Betätigungseinrichtung, **dadurch gekennzeichnet**, dass die Betätigungseinrichtung (11) eine nach außen gerichtete, die Mantelfläche der Bohrstange durchdringende Stellbewegung der Schneideinrichtung (5) gegen einen definierten jeweils der mindestens einen Schneideinrichtung zugeordneten Anschlag (Unterseite (69)) bewirkt.

2. Bohrstange nach Anspruch 1, **dadurch gekennzeichnet**, daß die Betätigungseinrichtung (11) auf die Führungseinrichtung (9) einwirkt.

3. Bohrstange nach Anspruch 2, **dadurch gekennzeichnet**, daß die Führungseinrichtung (9) mittels der Betätigungseinrichtung (11) gegen einen Anschlag bewegt wird.

4. Bohrstange nach einem der vorhergehenden Ansprüche, **dadurch gekennzeichnet**, daß die Schneideinrichtung (5) und die Führungseinrichtung (9) eine gemeinsame Betätigungseinrichtung (11) aufweisen.

5. Bohrstange nach einem der vorhergehenden Ansprüche, **dadurch gekennzeichnet**, daß mehrere Schneideinrichtungen (5) und Führungseinrichtungen (9) vorgesehen sind, die vorzugsweise von einer gemeinsamen Betätigungseinrichtung (11) ansteuerbar sind.

6. Bohrstange nach einem der vorhergehenden Ansprüche, **dadurch gekennzeichnet**, daß die Schneideinrichtung (5) und die Führungseinrichtung (9) mit jeweils einem Rückstellelement (73) versehen sind.

7. Bohrstange nach einem der vorhergehenden Ansprüche, **dadurch gekennzeichnet**, daß eine Schneideinrichtung (5) und eine zugehörige Führungseinrichtung (9) über ein gemeinsames Rückstellelement (73) miteinander verbunden sind.

8. Bohrstange nach einem der vorhergehenden Ansprüche, **dadurch gekennzeichnet**, daß die Betätigungseinrichtung (11) ausschließlich über ein gasförmiges oder flüssiges Medium auf die Schneideinrichtung (5) und/oder Führungseinrichtung (9) wirkt.

9. Bohrstange nach einem der vorhergehenden Ansprüche, **dadurch gekennzeichnet**, daß die Betätigungseinrichtung (11) einen abgeschlossenen Raum (13) innerhalb der Bohrstange (1) aufweist.

10. Bohrstange nach einem der vorhergehenden Ansprüche, **dadurch gekennzeichnet**, daß die Betätigungseinrichtung (11) eine Druckübersetzungseinrichtung (Kolben (21)) aufweist.

11. Bohrstange nach einem der vorhergehenden Ansprüche, **dadurch gekennzeichnet**, daß die Druckübersetzungseinrichtung einen Kolben (21) mit verschiedenen Wirkflächen (Stirnseite (27), Stirnfläche (31)) aufweist, von denen die kleinere mit dem Medium im abgeschlossenen Raum (13) zusammenwirkt und die größere mit einem Arbeitsmedium beaufschlagbar ist.

12. Bohrstange nach einem der vorhergehenden Ansprüche, **dadurch gekennzeichnet**, daß die Betätigungseinrichtung (11) über die Kühl-/Schmiermittelzufuhr betätigbar ist.

13. Bohrstange nach einem der vorhergehenden Ansprüche, **dadurch gekennzeichnet**, daß jeweils eine Schneideinrichtung (5) beziehungsweise eine Führungseinrichtung (9) mehrere Schneidplatten und/oder Führungsleisten aufweist.

14. Bohrstange nach einem der vorhergehenden Ansprüche, **dadurch gekennzeichnet**, daß die Schneideinrichtung (5) einen Tragkörper (51) zur Aufnahme der Schneidplatte (53) und/oder Führungsleiste (59') aufweist.

15. Bohrstange nach einem der vorhergehenden Ansprüche, **dadurch gekennzeichnet**, daß die Schneideinrichtung (5) einen zylindrischen Ansatz (57) aufweist.

16. Bohrstange nach einem der vorhergehenden Ansprüche, **dadurch gekennzeichnet**, daß der Schneideinrichtung (5) und/oder der Führungseinrichtung (9) ein Führungselement (67) zugeordnet ist.

17. Bohrstange nach einem der vorhergehenden Ansprüche, **dadurch gekennzeichnet**, daß die Schneideinrichtung (5) und/oder die Führungseinrichtung (9) einen Anschlag (Oberseite (71)) aufweist, der mit dem Führungselement (67) zusammenwirkt.

18. Bohrstange nach einem der vorhergehenden Ansprüche, **dadurch gekennzeichnet**, daß die Schneideinrichtung (5) und die Führungseinrichtung (9) so ausgebildet sind, daß einer Schneidplatte (53) eine diametral gegenüberliegende Führungsleiste (59) zugeordnet ist.

19. Bohrstange nach einem der vorhergehenden Ansprüche, **dadurch gekennzeichnet**, daß die Schneideinrichtungen (5) entlang einer gedachten in axialer Richtung der Bohrstange (1) verlaufenden Linie angeordnet sind.

20. Bohrstange nach einem der Ansprüche 1 bis 19, **dadurch gekennzeichnet**, daß die Schneideinrichtungen (5) zueinander versetzt angeordnet sind.

## Claims

1. A boring bar for machining bore surfaces which are arranged at a distance from one another in an axial direction, in particular crankshaft bearing bores and/or camshaft bearing bores, having at least one cutting arrangement and at least one guide arrangement which is associated with the cutting arrangement and having an operating arrangement which acts upon the cutting arrangement, characterised in that the operating arrangement (11) brings about an outward-directed adjustment motion of the cutting arrangement (5), this motion passing through the outer surface of the boring bar and finishing against a defined stop (underside (69)) associated in each case with the at least one cutting arrangement.

2. A boring bar in accordance with Claim 1, characterised in that the operating arrangement (11) acts upon the guide arrangement (9).

3. A boring bar in accordance with Claim 2, characterised in that the guide arrangement (9) is moved against a stop by means of the operating arrangement (11).

4. A boring bar in accordance with any one of the preceding Claims, characterised in that the cutting arrangement (5) and the guide arrangement (9) have a joint operating arrangement (11).

5. A boring bar in accordance with any one of the preceding Claims, characterised in that a plurality of cutting arrangements (5) and guide arrangements (9) are provided, these preferably being actuatable by a joint operating arrangement (11).

6. A boring bar in accordance with any one of the preceding Claims, characterised in that the cutting arrangement (5) and the guide arrangement (9) are each provided with a restoring element (73).

7. A boring bar in accordance with any one of the preceding Claims, characterised in that a cutting arrangement (5) and an associated guide arrangement (9) are connected to one another via a joint restoring element (73).

8. A boring bar in accordance with any one of the preceding Claims. characterised in that the operating arrangement (11) acts upon the cutting arrangement (5) and/or guide arrangement (9) solely via a gaseous or fluid medium.

9. A boring bar in accordance with any one of the preceding Claims, characterised in that the operating arrangement (11) has an enclosed space (13) within the boring bar (1).

10. A boring bar in accordance with any one of the preceding Claims, characterised in that the operating arrangement (11) has a pressure transmission arrangement (piston (21)).

11. A boring bar in accordance with any one of the preceding Claims, characterised in that the pressure transmission arrangement has a piston (21) with different active areas (end face (27). end surface (31)), of which the smaller co-operates with the medium in the enclosed space (13) and the larger can be acted upon by a working medium.

12. A boring bar in accordance with any one of the preceding Claims, characterised in that the operating arrangement (11) can be actuated via the coolant/lubricant feed.

13. A boring bar in accordance with any one of the preceding Claims, characterised in that a cutting arrangement (5) respectively a guide arrangement (9) has a plurality of cutting plates and/or guide strips.

14. A boring bar in accordance with any one of the preceding Claims, characterised in that the cutting arrangement (5) has a supporting body (51) for receiving the cutting plate (53) and/or guide strip (59').

15. A boring bar in accordance with any one of the preceding Claims, characterised in that the cutting arrangement (5) has a cylindrical projection (57).

16. A boring bar in accordance with any one of the preceding Claims, characterised in that the cutting arrangement (5) and/or the guide arrangement (9) has/have a guide element (67) associated therewith.

17. A boring bar in accordance with any one of the preceding Claims, characterised in that the cutting arrangement (5) and/or the guide arrangement (9) has/have a stop (upper side (71)) which co-operates with the guide element (67).

18. A boring bar in accordance with any one of the preceding Claims, characterised in that the cutting arrangement (5) and the guide arrangement (9) are formed in such a manner that a diametrically opposing guide strip (59) is associated with a cutting plate (53).

19. A boring bar in accordance with any one of the preceding Claims, characterised in that the cutting arrangements (5) are arranged along a notional line running in the axial direction of the boring bar (1).

20. A boring bar in accordance with any one of Claims 1 to 19, characterised in that the cutting arrangements (5) are staggered.

## Revendications

1. Barre d'alésage pour usiner des surfaces d'alésages disposées à distance entre elles en direction axiale, notamment d'alésages de vilebrequin et/ou d'arbre à cames, avec au moins un dispositif de coupe et au moins un dispositif de guidage associé au dispositif de coupe, et avec un dispositif d'actionnement agissant sur le dispositif de coupe, **caractérisée** en ce que le dispositif d'actionnement (11) produit un mouvement d'ajustement, dirigé vers l'extérieur et traversant la face d'enveloppe de la barre d'alésage, du dispositif de coupe (5) contre une butée définie [côté inférieur (69)] respectivement associée au dispositif de coupe ou à chaque dispositif de coupe.

2. Barre d'alésage selon la revendication 1, **caractérisée** en ce que le dispositif d'actionnement (11) agit sur le dispositif de guidage (9).

3. Barre d'alésage selon la revendication 2, **caractérisée** en ce que le dispositif de guidage (9) est déplacé contre une butée au moyen du dispositif d'actionnement (11).

4. Barre d'alésage selon une des revendications précédentes, **caractérisée** en ce que le dispositif de coupe (5) et le dispositif de guidage (9) présentent un dispositif d'actionnement commun (11).

5. Barre d'alésage selon une des revendications précédentes, **caractérisée** en ce que plusieurs dispositifs de coupe (5) et dispositifs de guidage (9) sont prévus, qui peuvent de préférence être asservis par un dispositif d'actionnement commun (11).

6. Barre d'alésage selon une des revendications précédentes, **caractérisée** en ce que le dispositif de coupe (5) et le dispositif de guidage (9) sont pourvus d'un élément de rappel respectif (73).

7. Barre d'alésage selon une des revendications précédentes, **caractérisée** en ce qu'un dispositif de coupe (5) et un dispositif de guidage associé (9) sont mutuellement reliés par l'intermédiaire d'un élément de rappel commun (73).

8. Barre d'alésage selon une des revendications précédentes, **caractérisée** en ce que le dispositif d'actionnement (11) agit exclusivement par l'intermédiaire d'un agent gazeux ou liquide sur le dispositif de coupe (5) et/ou le dispositif de guidage (9).

9. Barre d'alésage selon une des revendications précédentes, **caractérisée** en ce que le dispositif d'actionnement (11) présente une chambre fermée (13) à l'intérieur de la barre d'alésage (1).

10. Barre d'alésage selon une des revendications précédentes, **caractérisée** en ce que le dispositif d'actionnement (11) présente un moyen de transmission de pression ([piston (21)].

11. Barre d'alésage selon une des revendications précédentes, **caractérisée** en ce que le moyen de transmission de pression comprend un piston (21) avec différentes surfaces actives [côté frontal (27), côté frontal (31)], parmi lesquelles la plus petite coopère avec le fluide dans la chambre fermée (13) et la plus grande peut être sollicitée par un fluide de travail.

12. Barre d'alésage selon une des revendications précédentes, **caractérisée** en ce que le dispositif d'actionnement (11) peut être actionné au moyen de l'apport de réfrigérant/ lubrifiant.

13. Barre d'alésage selon une des revendications précédentes, **caractérisée** en ce que chaque dispositif de coupe (5) et/ou dispositif de guidage (9) présente plusieurs plaquettes de coupe et/ou glissières de guidage.

14. Barre d'alésage selon une des revendications précédentes, **caractérisée** en ce que le dispositif de coupe (5) présente un corps porteur (51) pour recevoir la plaquette de coupe (53) et/ou la glissière de guidage (59').

15. Barre d'alésage selon une des revendications précédentes, **caractérisée** en ce que le dispositif de coupe (5) présente un appendice cylindrique (57).

16. Barre d'alésage selon une des revendications précédentes, **caractérisée** en ce qu'un élément de guidage (67) est associé au dispositif de coupe (5) et/ou au dispositif de guidage (9).

17. Barre d'alésage selon une des revendications précédentes, **caractérisée** en ce que le dispositif de coupe (5) et/ou le dispositif de guidage (9) présente une butée [côté supérieur (71)] qui coopère avec l'élément de guidage (67).

18. Barre d'alésage selon une des revendications précédentes, **caractérisée** en ce que le dispositif de coupe (5) et le dispositif de guidage (9) sont conçus de telle sorte qu'une glissière de guidage (59) diagonalement opposée est associée à une plaquette de coupe (53).

19. Barre d'alésage selon une des revendications précédentes, **caractérisée** en ce que les dispositifs de coupe (5) sont disposés le long d'une ligne imaginaire s'étendant dans la direction axiale de la barre d'alésage (1).

20. Barre d'alésage selon une des revendications 1 à 19, **caractérisée** en ce que les dispositifs de coupe (5) sont disposés en décalage mutuel.
